Europäisches Patentamt

(19) European Patent Office

Office européen des brevets

(11) Publication number: **0 266 804 B1**

# EUROPEAN PATENT SPECIFICATION

(45) Date of publication of patent specification: **09.10.91**

(21) Application number: **87118635.9**

(22) Date of filing: **05.07.85**

(51) Int. Cl.5: **B29C 49/42**, B29C 49/64

(60) Publication number of the earlier application in accordance with Art.76 EPC: **0 173 818**

(54) Preparation of hollow plastic articles.

(30) Priority: **07.09.84 US 648793**
**14.05.85 US 733969**

(43) Date of publication of application:
**11.05.88 Bulletin 88/19**

(45) Publication of the grant of the patent:
**09.10.91 Bulletin 91/41**

(84) Designated Contracting States:
**AT BE CH DE FR GB IT LI LU NL SE**

(56) References cited:
**EP-A- 0 069 007      FR-A- 2 394 381**
**US-A- 3 283 046      US-A- 4 005 245**
**US-A- 4 313 905      US-A- 4 405 556**

(73) Proprietor: **HUSKY INJECTION MOLDING SYS-TEMS LTD.**
**500 Queen Street South**
**CA-Bolton, Ontario L0P 1A0(CA)**

(72) Inventor: **Schad, Robert D.**
**500 Queen Street South**
**Bolton Ontario L0P 1AO(CA)**
Inventor: **Rees, Herbert**
**PR '5**
**Orangeville Ontario L9W 2Z2(CA)**
Inventor: **Hughes, Gary**
**P.O. Box 52**
**Nobleton Ontario L0G 1NO(CA)**
Inventor: **Murchie, John R.**
**2 Ottawa Court**
**Aurora Ontario L4G 2Y7(CA)**

(74) Representative: **Weiss, Peter, Dr. rer.nat.**
**Patentanwalt Dr. Peter H. Weiss Postfach 12**
**50 Zeppelinstrasse 4**
**W-7707 Engen(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a carrying means for holding and cooling an elevated temperature parison therein having similar to a tube an open forward end for receiving said parison, a closed rearward end, a longitudinal wall between the forward and rearward ends.

This carrying means will be used in a system for producing, by injection or compression molding (collectively referred to as pressure molding), partly finished parisons which are transferred sequentially to one or more aftertreatment stations for the performance of secondary operations thereon. In particular, the parisons may be of polymeric material and the secondary operations may be a thermal conditioning thereof followed by their transformation into hollow articles, such as containers, by blowing with or without mechanical stretching.

A system for conveying parisons or preforms by means of pallets into and out of a blow molding station has been described in U.S. Patent No. 4,426,202 and in the basical european application 0 173 818.

Referring to the carrying means, in past practiced and shown in the US-A-3 283 046, the parisons were stripped into a guide tube, the inside dimension of which was cylindrically and typically larger than that of the parisons. The parisons were then supported on the shoulder of the guide tubes by suction within the guide tubes. Upon insertion of the parison into the guide tube internal pressure was applied within the guide tube causing the still pliable parison to expand against the walls of the guide tube and thereby establishing heat transfer contact in order to obtain cooling of the parison. A pressure differential between the inside of the parison and the space between the outside thereof and the guide tube can be established by applying higher than atmospheric pressure inside the guide tube or by applying vacuum therein.

It has been found that this type of system is not entirely successful since it is difficult to carry out and necessitates accurate and expensive locating means to place the parisons into the guide tubes. Furthermore the influence concerning the temperature control of the parison is limited.

It is the object of the invention to provide an improved carrying means for holding and cooling an elevated temperature parison.

Pursuant to the aspect of the invention said carrying means resp. the tube is provided with an internal surface tapering inwardly from the open end towards the closed end and corresponding to a taper of the elevated temperature parison but the cross section of this taper is somewhat larger than the cross section of the tube, furthermore cooling means are arranged adjacent the internal surface so that said cooling means operative to shrink the parison upon cooling and means for maintaining resp. drawing the cooled parison inside the tube in that the shrinking parison slides inside the tube to fit snugly therein.

One way for maintaining resp. drawing the cooled parison inside the tube opens the use of a suction means adjacent the closed end of the tube. In this embodiment of the invention there is provided a cavity between the bottom of the parison and the closed end of the tube. Said cavity is connected with a suction means via a suction channel. When the parison shrinks the vacuum in the cavitiy draws the parison inside the tube. The parison is always in contact with the internal cooled surface of the tube. Therefore the cooling effect of the cooling means is improved.

The above and other features of our invention will now be described in detail with reference to the accompanying drawings in which:

Fig. 1    is a perspective view of an injection molding apparatus pallet transport and blow molding apparatus;

Fig. 2    is a cross-sectional view of a robot means with carrying means arranged above receiving means;

Fig. 3    is a detailed view of the carrying means for conveying the parisons from the injection mold to the receiving station at one point in the operation; and

Fig. 4    is a detailed view of the same carrying means for conveying the parisons from the injection mold to the receiving station at a later stage in the operation.

In a preferred embodiment of a transport system of the present invention -not shown- conveyor means transports pallets from receiving station to finishing station. The empty pallets are returned to the receiving station via second conveyor means.

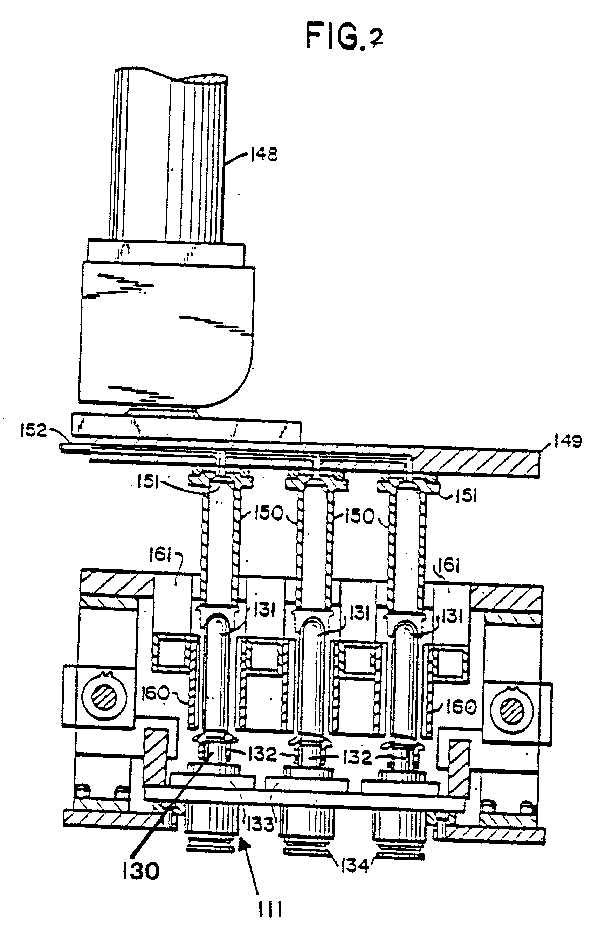

The pallets 111 contain a desired number of parison holding means or plugs 130 for holding parisons 131 via the open neck thereof 132, with three such plugs per pallett shown in Fig. 2.

Pallets 111 comprise a platform member 133 supporting parison holding means or plugs 130 which are rotatably journaled to pulley means 134 beneath platform member 133 so that the pulley means 134 and hence the plugs may be rotated in a clockwise or counterclockwise direction as desired. Any number of parison holding means or plugs 130 may be selected for each pallet. Generally, the number of plugs per pallet will correspond to the number of blow molds at the finishing station be described hereinbelow.

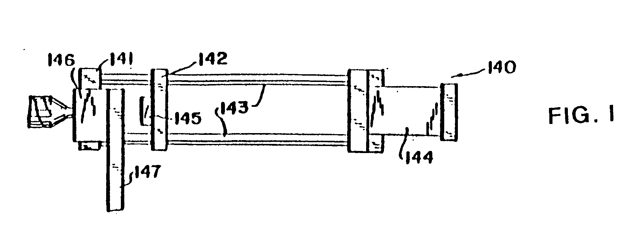

The parisons are preferably delivered to the receiving station as the output of an associated injection molding machine, although other parison preparation or delivery means may be used, for example, compression or extrusion molding. In the preferred embodiment as shown in Fig. 1, injection molding machine 140 prepares the appropriate number of parisons based on the capacity of the injection molding machine. Naturally, any desired injection molding configuration may be used. As shown in Fig. 1 the injection molding machine includes a fixed platen 141 and a movable platen 142. The movable platen moves on tie rods 143 via machine clamp 144. Mold means 145 are provided between the fixed and movable platen to prepare the desired number of parisons. Carrier means such as robot 146 are provided adjacent the fixed and movable platen having track 147 for carrying robot arm 148 (see Fig. 2) which in turn carries robot plate 149. Robot plate contains adjacent thereto a number of parison carrying means 150 corresponding to the number of parisons prepared in the injection molding machine.

Carrying means 150 are open ended hollow tubes having channel means 151 at the base thereof connected to vacuum or suction means 152 for holding the parisons in the tubes. Thus, parisons are formed in injection molding machine 140, movable platen 142 disengages from the fixed platen 141 and robot arm 148 carrying robot plate 149 moves between the fixed and movable platen so that parisons carrying means or tubes 150 engage parisons 131. Suction means 152 is used to transfer parisons 131 from the injection molding machine to tubes 150 and retain the parisons therein. Robot plate 149 is then moved out from between fixed platen 141 and movable platen 142 and rotated so that robot plate 149 is placed adjacent receiving station 112 as shown in Fig. 2. Parisons 131 are then delivered to pallets 111 by releasing the suction from suction means 152. Parisons 131 are then released so that the open neck Portion 132 engages plugs 130 with guide tube 160 supported by support frame 161 insuring that the parisons are properly directed to engage plugs 130. Referring to Fig. 2, it can be seen that the parisons 131 are properly seated on plugs 130. As shown in phantom in Fig. 2, open neck 132 indicates the position of the parison in tubes 150.

After the parisons are loaded on pallets 111 the pallets are transferred one at a time from the receiving station to the first conveyor means 111. Simultaneously therewith, an empty pallet is transferred from the second conveyor means to the receiving station.

As indicated hereinabove, the initial step of the temperature conditioning cycle for conditioning the parisons from the injection molding machine to the finishing station is the post cooling operation conducted in the parison carrying means or tubes 150.

Preferably, the parison carrying means of tubes are provided with heat transfer means which will be described in more detail hereinbelow in order to post cool the still warm parisons from the injection molding operation.

According to a preferred practice of the present invention, carrying tube 150 is provided with a cavity 222 having tapered walls as, for example, a taper of 0 degrees, 25 minutes, 30 seconds, the taper thereof being the same as the taper of the parison. Parisons are normally tapered in order to facilitate removal from the injection mold. The mouth dimension of carrying tube 150 is chosen so as not to permit the parison to fill cavity 220 completely. Instead, at the time of insertion, a small portion of the parison will protrude from carrying tube 150. Carrying tube 150 is provided with temperature control means schematically indicated by channels 221 which can be connected to any source of heat transfer fluid. Suction channel 222 is provided for removal of air from cavity 220 during insertion of the parison and is used to apply vacuum within cavity 220. It is seen that parison 131 will make contact with the inner mold wall due to the taper but only to the extent that the opening of the guide tube will permit. As the parison 131 cools in contact with the guide tube wall due to the pressure differential established between the atmosphere inside the parison and the vacuum applied through channel 222, it is reduced in size and therefore slides downward along the tapered wall of the guide tube.

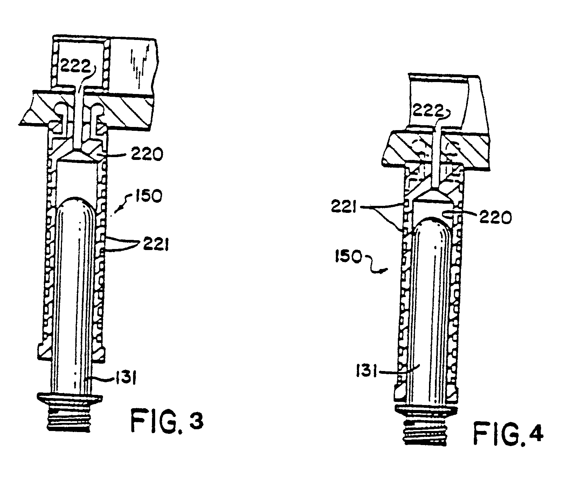

Fig. 4 is a schematic sectional view which shows the parison in its final position. Thus, it can be seen that the cooling effect due to surface contact between the parison and the guide tube is in this instance given by a taper which, of course, is also an automatic locating means for centering the parison in the cavity. Accordingly, in this improved post cooling mold, there is no need for expensive locating devices in the cooling process. It is automatically accomplished by virtue of the dimensional change which occurs in the parison in the course of cooling.

This invention may be embodied in other forms or carried out in other ways. The present embodiment is therefore to be considered as in all respects illustrative and not restrictive, the scope of the invention being indicated by the appened claims, and all changes which come within the meaning and range of equivalency are intended to be embraced therein.

## Claims

1. A carrying means (150) for holding and cooling an elevated temperature parison (131) therein having similar to a tube an opening forward end for receiving said parison, a closed rearward end, a longitudinal wall between the forward and rearward ends,

characterized in that

the inside of the carrying means is provided with an internal surface tapering inwardly from the open end towards the closed end and corresponding to a taper of the elevated temperature parison (131) but the cross section of this taper is somewhat larger than the cross section of the tube, furthermore cooling means (221) are arranged adjacent the internal surface so that said cooling means (221) is operative to shrink the parison (131) upon cooling and means for maintaining resp. drawing the cooled parison (131) inside the tube in that the shrinking parison (131) slides inside the tube to fit snugly therein.

2. A carrying means according to claim 1, characterized in that the means for maintaining resp. drawing the cooled parison (131) inside the tube is a suction means adjacent the closed end of the tube.

3. A carrying means according to claim 2, characterized in that a cavity (220) is provided between the bottom of the parison (131) and the closed end of the tube, said cavity (220) is connected with a suction means via a suction channel (222).

## Revendications

1. Moyens de transport (150) destinés à maintenir et refroidir une paraison à température élevée (131) à l'intérieur de ceux-ci, ces moyens comportant, à la manière d'un tube, une extrémité avant ouverte pour recevoir la paraison, une extrémité arrière fermée, et une paroi longitudinale entre les extrémités avant et arrière, moyens de transport, caractérisés en ce que :
   - l'intérieur de ces moyens de transport présente une surface interne conique s'amincissant vers l'intérieur en allant de l'extrémité ouverte vers l'extrémité fermée, et correspondant à une partie conique de la paraison à température élevée (131) mais la section transversale de cette partie conique étant légèrement supérieure à la section transversale du tube, en ce que des moyens de refroidissement (221) sont en outre disposés au voisinage de la surface intérieure de façon que ces moyens de refroidissement (221) servent à contracter la paraison (131) au moment du refroidissement, et en ce qu'on utilise des moyens pour maintenir et tirer respectivement la paraison refroidie (131) à l'intérieur du tube, de façon que la paraison (131) en train de se contracter glisse à l'intérieur du tube pour s'emboîter doucement dans celui-ci.

2. Moyens de transport selon la revendication 1, caractérisés en ce que les moyens pour maintenir et tirer respectivement la paraison refroidie (131) à l'intérieur du tube, sont constitués par un dispositif d'aspiration placé au voisinage de l'extrémité fermée du tube.

3. Moyens de transport selon la revendication 2, caractérisés en ce qu'on utilise une cavité (220) entre le fond de la paraison (131) et l'extrémité fermée du tube, cette cavité (220) étant reliée à un dispositif d'aspiration par un conduit d'aspiration (222).

## Patentansprüche

1. Trageinrichtung (150) zum Halten und Kühlen eines noch warmen Vorformlings (131), welche ähnlich einer tubenartigen Röhre ein vorderes offenes Ende zum Aufnehmen dieses Vorformlings und ein geschlossenes hinteres Ende sowie eine längsgestreckte Wand zwischen dem vorderen und dem hinteren Ende aufweist,

dadurch gekennzeichnet,

daß das Innere der Trageinrichtung mit einer inneren Oberfläche versehen ist, welche sich von dem offenen Ende zu dem geschlossenen Ende nach innen verjüngt und mit einer konischen Form bzw. Verjüngung des noch warmen Vorformlings (131) übereinstimmt, wobei jedoch der Querschnitt dieser Verjüngung etwas größer ist als der Querschnitt der Röhre, daß weiterhin Kühleinrichtungen (221) benachbart zur inneren Oberfläche so angeordnet sind, daß diese Kühleinrichtungen (221) den Vorformling entsprechend der Kühlung kleiner werden lassen, und daß ferner Einrichtungen zum Halten bzw. Hineinziehen des gekühlten Vorformlings (131) in die Röhre hinein vorhanden sind, wobei der kleiner gewordene Vorformling (131) in die Röhre hineingleitet, um darin satt anzuliegen.

2. Trageinrichtung nach Anspruch 1, dadurch gekennzeichnet, daß die Einrichtung zum Halten bzw. Hineinziehen des gekühlten Vorformlings (131) in die Röhre eine Saugvorrichtung ist, welche dem geschlossenen Ende der Röhre zugeordnet ist.

3. Trageinrichtung gemäß Anspruch 2, dadurch gekennzeichnet, daß ein Hohlraum (220) zwischen dem Boden des Vorformlings (131) und dem geschlossenen Ende der Röhre vorgesehen ist, wobei dieser Hohlraum (220) mit einer Saugvorrichtung über einen Saugkanal (222) verbunden ist.

FIG. 1

EP 0 266 804 B1

# FIG.2

7

FIG. 3

FIG. 4